# EUROPEAN PATENT SPECIFICATION

(11) **EP 4 141 292 B1**
(45) Date of publication and mention of the grant of the patent: **22.01.2025**
(21) Application number: 21192506.0
(22) Date of filing: 23.08.2021
(51) Int. Cl.: F16H 61/4104

(54) **HYDRAULIC SYSTEM, MINING VEHICLE AND METHOD**
HYDRAULIKSYSTEM, BERGBAUFAHRZEUG UND VERFAHREN
SYSTÈME HYDRAULIQUE, VÉHICULE D'EXPLOITATION MINIÈRE ET PROCÉDÉ

(43) Date of publication of application: 01.03.2023
(73) Proprietor: Sandvik Mining and Construction Oy, 33330 Tampere (FI)
(72) Inventor: PARKKINEN, Pertti, 33311 Tampere (FI); VERHO, Samuli, 33311 Tampere (FI); HONGELL, Teemu, 33311 Tampere (FI)
(74) Representative: Sandvik

(56) References cited:
- FR-A3- 3 029 469
- US-A1- 2005 005 600
- US-A1- 2016 084 271

## Description

### Background of the invention

The invention relates to a mining vehicle with a hydraulic system. The hydraulic system is provided with a closed loop hydraulic circuit. The closed loop hydraulic circuit is flushed by means of a flushing system.

The field of the invention is defined more specifically in the preamble of the independent claim.

In mines and at other work sites different type of mining vehicles are used. The mining vehicles are provided with several hydraulic actuators which are connected to a hydraulic system. Further, the hydraulic system may comprise one or more closed loop hydraulic systems wherein pressurized hydraulic fluid is circulated from an outlet port of a hydraulic pump to an inlet port of the hydraulic actuator, and further from an outlet port of the hydraulic actuator to an inlet port of the first hydraulic pump. However, there may be a need to flush the closed loop hydraulic system by feeding fresh hydraulic fluid therein. In some known solutions flushing of the closed hydraulic system is executed by means of flushing fluid flow produced by means of a flushing pump connected to be driven simultaneously and parallel to the main hydraulic pump. Then the produced flushing flow and pressure is controlled by a separate control valve. Some known solutions are disclosed in patent publications US 2005/005600 A, FR 3029469 A and US 2016/084271 A. The known solutions for the flushing have shown to have some disadvantages which relate especially to poor energy efficiency and to unsatisfactory controllability of the flushing.

### Brief description of the invention

An object of the invention is to provide a mining vehicle equipped with a novel and improved hydraulic system.

The mining vehicle according to the invention is characterized by the characterizing features of the independent apparatus claim.

An idea of the disclosed solution is that a mining vehicle comprises a movable carrier, at least one mining work device mounted on the carrier and a hydraulic system with a closed loop hydraulic circuit. The closed loop hydraulic circuit of a hydraulic system is provided with a flushing system comprising at least one feed arrangement for feeding limited amount of additional hydraulic fluid to the closed loop hydraulic circuit from a separate hydraulic fluid source, and a discharge arrangement for discharging limited amount of used hydraulic fluid from the closed loop hydraulic circuit to the separate hydraulic fluid source. Thereby the flushing system provides the closed loop hydraulic circuit with a limited flushing flow by controlling the feed and discharge. In the disclosed solution the mentioned discharge arrangement comprises at least one discharge valve which is actively controlled under control of at least one control unit and wherein fluid flow through the discharge valve is selectively controllable. The hydraulic system comprises an open hydraulic circuit serving as a common rail hydraulic circuit and configured to provide hydraulic fluid for the flushing system and for at least one hydraulic actuator coupled to the open hydraulic circuit. The open hydraulic circuit is provided with a second hydraulic pump driven by means of at least one dedicated second motor under control of the control unit.

In other words, the closed loop hydraulic circuit is provided with an actively controlled by-pass flow system allowing limited flow of pressure fluid to be fed to the closed loop hydraulic circuit and out of it to ensure proper quality of the hydraulic fluid in the system.

An advantage of the disclosed solution is that the flushing can be controlled effectively and accurately when the control unit controls the by-pass flow system actively. The control unit may also monitor several parameters and take them account in the control of the flushing. More versatile flushing control principles and situations can be implemented when the active control is executed by means of the control unit. Further, the improved control makes the system also more effective and saves energy. The second hydraulic pump can be utilized not only for the flushing purpose but also to drive selected hydraulic auxiliary devices of the mining vehicle. Then no separate hydraulic pump is needed only for the flushing.

In the closed loop hydraulic circuit pressurized hydraulic fluid flows directly from the hydraulic pump to the hydraulic actuator, which is typically a hydraulic motor, and returns directly to the hydraulic pump without entering a tank or other hydraulic fluid reservoir. The flow and direction of the hydraulic fluid controls the hydraulic motor. The hydraulic motor can operate in either directions. In the closed loop system hydraulic pressure and flow is generated only when needed and only as much as required.

According to an embodiment, the feed arrangement may comprise one or more feed valves for controlling feeding of fresh hydraulic fluid to the closed loop hydraulic circuit.

According to an embodiment, the feed arrangement and the discharge arrangement are both in direct fluid connection with a tank serving as the separate hydraulic fluid source.

According to an embodiment, the hydraulic system comprises at least one filtering or cooling device for treating the discharged hydraulic fluid before feeding it through the feed arrangement to the closed loop hydraulic circuit. The filtering or cooling device may be arranged in connection with the fluid source or storage.

According to an embodiment, the mentioned feed arrangement comprises a second hydraulic pump driven by means of at least one dedicated second motor. In other words, the disclosed flushing arrangement comprises a separate hydraulic pump for producing the required flushing flow. The pump is actuated by means of a dedicated motor, whereby the operation of the pump is controllable independently relative to the pumping means of the closed loop hydraulic circuit.

According to an embodiment, at least the second motor is a speed controlled electric motor controlled by means of at least one electrical motor control device and at least the second hydraulic pump is a fixed displacement pump. Then the control unit is configured to control the mentioned electrical motor control device for adjusting magnitude of pressure and flow of the hydraulic fluid affecting in the feed arrangement of the flushing system.

According to an embodiment, the second hydraulic pump for producing the flushing flow may alternatively be any kind of hydraulic pump. Thus, the second hydraulic pump may be a variable displacement pump, for example.

According to an embodiment, the closed loop hydraulic circuit is provided with one or more sensing devices for sensing properties of the hydraulic fluid. The control unit is provided with the sensing data and generates control signals for controlling at least the discharge valve in response to the sensing data.

According to an embodiment, the sensing data mentioned in the previous embodiment is also used for controlling operation of the second motor and magnitude of the produced flushing flow.

According to an embodiment, the mentioned sensing device is a temperature sensor for sensing temperature of the hydraulic fluid. The control unit may control the flushing for cooling the temperature of the circuit.

According to an embodiment, the mentioned sensing device is a fluid condition monitoring sensor for sensing fluid properties of the hydraulic fluid.

According to an embodiment, the fluid condition monitoring sensor is a sensor or analyzing device for detecting cleanliness of the hydraulic fluid.

According to an embodiment, the closed loop hydraulic circuit is further provided with one or more pressure or flow sensors. The produced sensing data is transmitted to the control unit. Furthermore, temperature of the pressure fluid can be sensed in connection with at least one hydraulic actuator. The control unit may be configured to provide control signals in response to the received sensing data.

According to an embodiment, the control unit detects operational state of the closed loop hydraulic circuit and generates control signals in response to the detected operational state for controlling at least the discharge calve of the flushing system.

According to an embodiment, the control unit is configured to detect use ratio of the closed loop hydraulic circuit and is configured to increase the flushing when the detected use ratio exceeds a predetermined limit value.

According to an embodiment, the control unit is configured to detect operating time or period of the closed loop hydraulic circuit and is configured to increase the flushing when the detected operating time exceeds a predetermined limit value.

According to an embodiment, the control unit is configured to monitor operation of the closed loop hydraulic circuit and is configured to increase the flushing when cumulative magnitudes of loadings, or estimated magnitudes of loadings of the forthcoming operations exceed predetermined limit values set for the loadings.

According to an embodiment, the control unit is configured to operate the flushing system for continuing cooling of the pressure fluid in the closed loop hydraulic circuit even when operation of the closed loop hydraulic circuit is switched off. This way a kind of aftercooling can be implemented for cooling the hydraulic fluid independently and for desired period. This way the hydraulic system may be prepared for forthcoming operations.

According to an embodiment, the control unit is configured to detect operational conditions where the closed loop hydraulic circuit operates. The control unit may increase the flushing when operating in harsh conditions and high temperatures, for example.

According to an embodiment, the control unit may be provided with a user interface by means of which an operator of the mine vehicle can communicate with the control unit, may input control parameters, and can make selections. The control unit may provide the operator with usable information by means of the user interface.

According to an embodiment, the mining vehicle is a rock drilling rig, a rock bolting device, a shotcreting device, a mine loading vehicle, or a mine truck. The disclosed closed loop hydraulic circuit may be arranged to operate a tramming or driving actuator, or a mining actuator, for example.

The above disclosed embodiments may be combined in order to form suitable solutions having those of the above features that are needed.

### Brief description of the figures

Some embodiments are described in more detail in the accompanying drawings, in which
Figure 1 is a schematic view of a hydraulic diagram of a hydraulic system comprising a closed loop hydraulic circuit and a flushing system for flushing it,
Figure 2 is a schematic diagram showing some control principles of the disclosed solution, and
Figure 3 is a schematic view of a hydraulic diagram of the claimed hydraulic system. In the figures, like reference numerals identify like elements.

### Detailed description of some embodiments

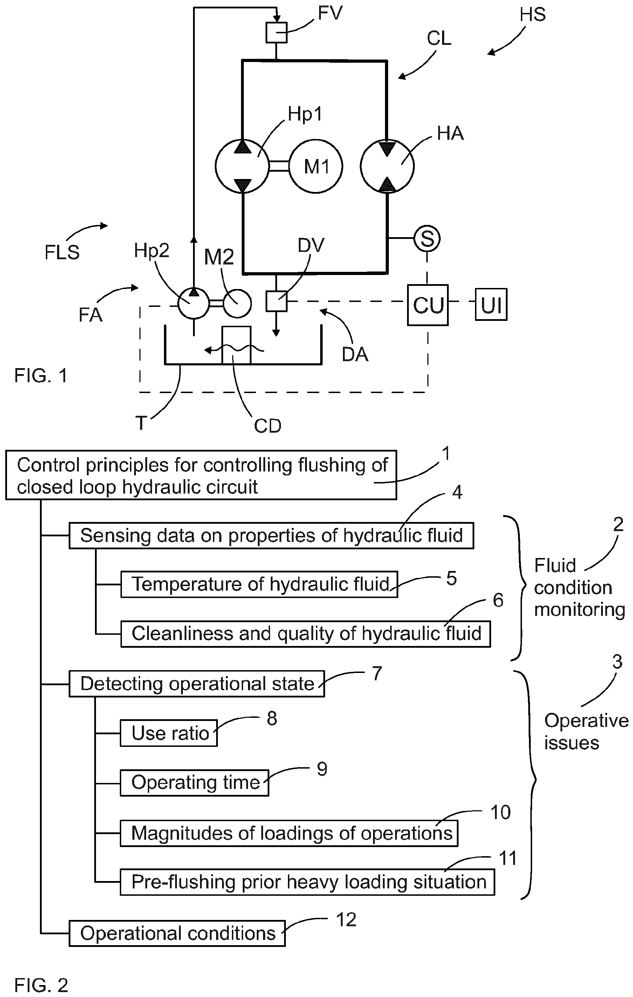

Figure 1 shows a hydraulic diagram of a hydraulic system HS of a mining vehicle, such as a rock drilling rig. The hydraulic system HS is provided with a closed loop hydraulic circuit CL comprising a first hydraulic pump Hp1 driven by means of a first motor M1. A hydraulic actuator HA is connected to the closed loop hydraulic circuit CL. As it is shown in Figure 1, pressurized hydraulic fluid is directed to circulate in the closed loop hydraulic circuit CL from an outlet port of the first hydraulic pump Hp1 to an inlet port of the hydraulic actuator HA and further from an outlet port of the hydraulic actuator HA to an inlet port of the first hydraulic pump Hp1. In Figure 1 the first hydraulic pump Hp1 and the hydraulic actuator Hp can be rotated to both rotational directions wherefore the inlet and outlet ports are not marked for clarity reasons.

The hydraulic system HS comprises a flushing system FLS provided with a feed arrangement FA for feeding limited amount of additional hydraulic fluid to the closed loop hydraulic circuit CL from a separate hydraulic fluid source T, and is also provided with a discharge arrangement DA for discharging limited amount of used hydraulic fluid from the closed loop hydraulic circuit CL to the separate hydraulic fluid source T. The separate hydraulic fluid source T may be a tank or reservoir, for example.

The mentioned discharge arrangement DA further comprises a discharge valve DV which is actively controlled under control of a control unit CU. Fluid flow through the discharge valve DV can be selectively controlled under control of the control unit CU. The control unit CU may comprise a processor configured to generate control signals in response to sensing data received from one or more sensing devices S. The control unit CU may be provided with a user interface UI for communicating with an operator. Control parameters and computer program products may be input to the control unit CU.

The mentioned feed arrangement FA comprises a second hydraulic pump Hp2 driven by means of a dedicated second motor M2. The feed arrangement further comprises a feed valve for controlling feeding of fresh hydraulic fluid to the closed loop hydraulic circuit CL.

The feed arrangement FA and the discharge arrangement DA are both in direct fluid connection with a tank serving as the separate hydraulic fluid source T.

There may be one or more filtering or cooling devices CD for treating the discharged hydraulic fluid before feeding it through the feed arrangement FA to the closed loop hydraulic circuit CL. The filtering or cooling device CD may be arranged in connection with the fluid source T.

Figure 2 discloses some control principles 1 for controlling flushing of closed loop hydraulic circuit. The control 1 may be based on fluid control monitoring 2 or operative issues 3, or both. The fluid condition monitoring 2 may comprise sensing data on properties of the hydraulic fluid 4. Then there is one or more fluid condition monitoring sensors for sensing fluid properties of the hydraulic fluid. A temperature sensor may be provided for sensing temperature of the hydraulic fluid 5. The control unit may control the flushing for cooling the temperature of the circuit. Alternatively, or in addition to, there may be one or more fluid condition monitoring sensors or analyzing devices for detecting cleanliness of the hydraulic fluid 6.

The mentioned operative issues 3 may relate to detecting operational state 7 of the closed loop hydraulic circuit. The control may take into account use ration 8, operating time **9,** magnitudes of loadings of operations 10, and may also arrange pre-flushing prior forthcoming loading situations 11.

Furthermore, the control unit may detect operational conditions 12 where the closed loop hydraulic circuit operates. Then the control unit may increase the flushing when operating in harsh conditions and high temperatures, for example.

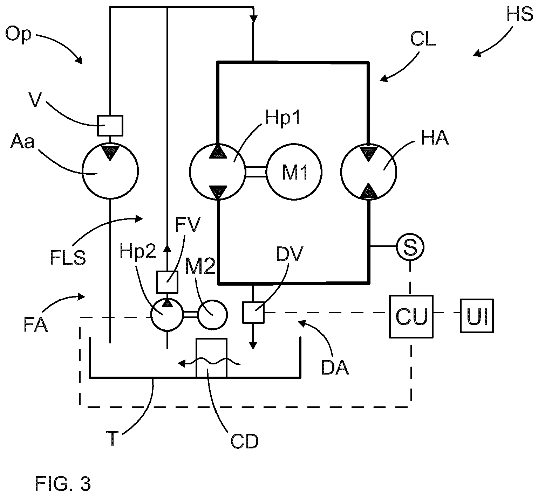

Figure 3 discloses a hydraulic system HS that differs from the one shown in Figure 1 only in that the second pump Hp2 is configured to produce hydraulic power also for an open loop hydraulic circuit Op provided with one or more hydraulic auxiliary actuators Aa. There may be a valve V for controlling feeding of hydraulic fluid in the open loop hydraulic circuit Op to auxiliary actuators Aa. The open loop hydraulic circuit comprising the auxiliary actuator Aa may also be called as common rail circuit.

The drawings and the related description are only intended to illustrate the idea of the invention. In its details, the invention may vary within the scope of the claims.

## Claims

1. A mining vehicle (1), comprising:
a movable carrier (2);
at least one mining work device mounted on the carrier (2); and
at least one hydraulic system (HS);
wherein the hydraulic system (HS) is provided with at least one closed loop hydraulic circuit (CL) comprising:
at least one first hydraulic pump (Hp1) driven by means of at least one first motor (M1);
at least one hydraulic actuator (HA);
and wherein pressurized hydraulic fluid is directed to circulate in the closed loop hydraulic circuit (CL) from an outlet port of the first hydraulic pump (Hp1) to an inlet port of the hydraulic actuator (HA) and further from an outlet port of the hydraulic actuator (HA) to an inlet port of the first hydraulic pump (Hp1); and
a flushing system (FLS) comprising at least one feed arrangement (FA) for feeding limited amount of additional hydraulic fluid to the closed loop hydraulic circuit (CL) from a separate hydraulic fluid source (T), and a discharge arrangement (DA) for discharging limited amount of used hydraulic fluid from the closed loop hydraulic circuit (CL) to the separate hydraulic fluid source (T);
wherein the mentioned discharge arrangement (DA) comprises at least one discharge valve (DV) which is actively controlled under control of at least one control unit (CU) and wherein fluid flow through the discharge valve (DV) is selectively controllable;
**characterized in that**
the hydraulic system (HS) comprises an open hydraulic circuit (Op) serving as a common rail hydraulic circuit and configured to provide hydraulic fluid for the flushing system and for at least one hydraulic actuator (Aa) coupled to the open hydraulic circuit (Op); and
the open hydraulic circuit (Op) is provided with a second hydraulic pump (Hp2) driven by means of at least one dedicated second motor (M2) under control of the control unit (CU).

2. The mining vehicle (1) as claimed in claim 1, **characterized in that**
the closed loop hydraulic circuit (CL) is provided with at least one sensing device (S) for sensing properties of the hydraulic fluid;
and the control unit (CU) is configured to receive sensing data from the sensing device (S) and is configured to generate control signals in response to the received sensing data for controlling at least the discharge valve (DV) of the flushing system (FLS).

3. The mining vehicle (1) as claimed in claim 2, **characterized in that**
the sensing device (S) is a temperature sensor for sensing temperature of the hydraulic fluid.

4. The mining vehicle (1) as claimed in claim 2, **characterized in that**
the sensing device (S) is a fluid condition monitoring sensor for sensing fluid properties of the hydraulic fluid.

5. The mining vehicle (1) as claimed in any one of the claims 1 - 4, **characterized in that**
the control unit (CU) is configured to detect operational state of the closed loop hydraulic circuit (CL) and is configured to generate control signals in response to the detected operational state for controlling at least the discharge calve (DV) of the flushing system (FLS).

## Patentansprüche

1. Bergbaufahrzeug (1), umfassend:
einen beweglichen Träger (2);
mindestens eine auf dem Träger (2) montierte Bergbauarbeitsvorrichtung; und
mindestens ein Hydrauliksystem (HS);
wobei das Hydrauliksystem (HS) mit mindestens einem geschlossenen Hydraulikkreislauf (CL) bereitgestellt ist, der Folgendes umfasst:
mindestens eine erste Hydraulikpumpe (Hp1), die mittels mindestens eines ersten Motors (M1) angetrieben wird;
mindestens eine hydraulische Betätigungsvorrichtung (HA);
und wobei unter Druck stehendes Hydraulikfluid geleitet wird, um in dem geschlossenen Hydraulikkreislauf (CL) von einem Auslassanschluss der ersten Hydraulikpumpe (Hp1) zu einem Einlassanschluss der hydraulischen Betätigungsvorrichtung (HA) und weiter von einem Auslassanschluss der hydraulischen Betätigungsvorrichtung (HA) zu einem Einlassanschluss der ersten Hydraulikpumpe (Hp1) zu zirkulieren; und
ein Spülsystem (FLS), das mindestens eine Zuführungsanordnung (FA) zum Zuführen einer begrenzten Menge an zusätzlichem Hydraulikfuid zum geschlossenen Hydraulikkreislauf (CL) von einer separaten Hydraulikfuidquelle (T) und eine Ablassanordnung (DA) zum Ablassen einer begrenzten Menge an verbrauchtem Hydraulikfuid vom geschlossenen Hydraulikkreislauf (CL) zur separaten Hydraulikflüssigkeitsquelle (T) umfasst;
wobei die erwähnte Ablassanordnung (DA) mindestens ein Ablassventil (DV) umfasst, das aktiv unter Steuerung von mindestens einer Steuereinheit (CU) gesteuert wird, und wobei der Fluidfluss durch das Ablassventil (DV) selektiv steuerbar ist;
**dadurch gekennzeichnet, dass**
das Hydrauliksystem (HS) einen offenen Hydraulikkreislauf (Op) umfasst, der als Common-Rail-Hydraulikkreislauf dient und konfiguriert ist, Hydraulikfluid für das Spülsystem und für mindestens eine hydraulische Betätigungsvorrichtung (Aa), die mit dem offenen Hydraulikkreislauf (Op) gekoppelt ist, bereitzustellen; und
der offene Hydraulikkreislauf (Op) mit einer zweiten Hydraulikpumpe (Hp2) bereitgestellt ist, die mittels mindestens eines eigenen zweiten Motors (M2) unter Steuerung der Steuereinheit (CU) angetrieben wird.

2. Bergbaufahrzeug (1) nach Anspruch 1, **dadurch gekennzeichnet, dass**
der geschlossene Hydraulikkreislauf (CL) mit mindestens einer Sensorvorrichtung (S) zum Erfassen von Eigenschaften des Hydraulikfluids bereitgestellt ist;
und die Steuereinheit (CU) konfiguriert ist, Sensordaten von der Sensorvorrichtung (S) zu empfangen, und konfiguriert ist, als Reaktion auf die empfangenen Sensordaten Steuersignale zum Steuern von mindestens dem Ablassventil (DV) des Spülsystems (FLS) zu erzeugen.

3. Bergbaufahrzeug (1) nach Anspruch 2, **dadurch gekennzeichnet, dass**
die Sensorvorrichtung (S) ein Temperatursensor zum Erfassen von Temperatur des Hydraulikfluids ist.

4. Bergbaufahrzeug (1) nach Anspruch 2, **dadurch gekennzeichnet, dass**
die Sensorvorrichtung (S) ein Fluidzustandsüberwachungssensor zum Erfassen von Fluideigenschaften des Hydraulikfluids ist.

5. Bergbaufahrzeug (1) nach einem der Ansprüche 1 - 4, **dadurch gekennzeichnet, dass**
die Steuereinheit (CU) konfiguriert ist, den Betriebszustand des geschlossenen Hydraulikkreislaufs (CL) zu erkennen, und konfiguriert ist, als Reaktion auf den erkannten Betriebszustand Steuersignale zum Steuern von mindestens dem Ablassventil (DV) des Spülsystems (FLS) zu erzeugen.

## Revendications

1. Véhicule minier (1) comprenant :
un support mobile (2) ;
au moins un dispositif de travaux miniers monté sur le support (2) ; et
au moins un système hydraulique (HS) ;
dans lequel le système hydraulique (HS) est pourvu d'au moins un circuit hydraulique à boucle fermée (CL) comprenant :
au moins une première pompe hydraulique (Hp1) entraînée au moyen d'au moins un premier moteur (M1) ;
au moins un actionneur hydraulique (HA) ;
et dans lequel un fluide hydraulique sous pression est dirigé pour circuler dans le circuit hydraulique à boucle fermée (CL) depuis un orifice de sortie de la première pompe hydraulique (Hp1) vers un orifice d'entrée de l'actionneur hydraulique (HA) et, en outre, depuis un orifice de sortie de l'actionneur hydraulique (HA) vers un orifice d'entrée de la première pompe hydraulique (Hp1) ; et
un système de rinçage (FLS) comprenant au moins un agencement d'alimentation (FA) pour fournir une quantité limitée de fluide hydraulique supplémentaire au circuit hydraulique à boucle fermée (CL) à partir d'une source de fluide hydraulique séparée (T), et un dispositif d'évacuation (DA) pour évacuer une quantité limitée de fluide hydraulique utilisé du circuit hydraulique à boucle fermée (CL) vers la source de fluide hydraulique séparée (T) ;
dans lequel l'agencement d'évacuation mentionné (DA) comprend au moins une vanne d'évacuation (DV) qui est commandée activement sous la commande d'au moins une unité de commande (CU) et dans lequel l'écoulement de fluide à travers la vanne d'évacuation (DV) peut être commandé de manière sélective ;
**caractérisé en ce que**
le système hydraulique (HS) comprend un circuit hydraulique ouvert (Op) servant de circuit hydraulique à rampe commune et configuré pour fournir un fluide hydraulique au système de rinçage et à au moins un actionneur hydraulique (Aa) couplé au circuit hydraulique ouvert (Op) ; et
le circuit hydraulique ouvert (Op) est pourvu d'une seconde pompe hydraulique (Hp2) entraînée au moyen d'au moins un second moteur dédié (M2) sous la commande de l'unité de commande (CU).

2. Véhicule minier (1) selon la revendication 1, **caractérisé en ce que**
le circuit hydraulique à boucle fermée (CL) est pourvu d'au moins un dispositif de détection (S) pour détecter des propriétés du fluide hydraulique ;
et l'unité de commande (CU) est configurée pour recevoir des données de détection en provenance du dispositif de détection (S) et est configurée pour générer des signaux de commande en réponse aux données de détection reçues pour commander au moins la vanne d'évacuation (DV) du système de rinçage (FLS).

3. Véhicule minier (1) selon la revendication 2, **caractérisé en ce que**
le dispositif de détection (S) est un capteur de température pour détecter la température du fluide hydraulique.

4. Véhicule minier (1) selon la revendication 2, **caractérisé en ce que**
le dispositif de détection (S) est un capteur de surveillance d'état du fluide pour détecter des propriétés de fluide du fluide hydraulique.

5. Véhicule minier (1) selon l'une quelconque des revendications précédentes 1- 4, **caractérisé en ce que**
l'unité de commande (CU) est configurée pour détecter un état de fonctionnement du circuit hydraulique à boucle fermée (CL) et est configurée pour générer des signaux de commande à la suite de l'état de fonctionnement détecté pour commander au moins la vanne d'évacuation (DV) du système de rinçage (FLS).
